# FASCICULE DE BREVET EUROPEEN

(11) **EP 0 415 830 B1**
(45) Date de publication et mention de la délivrance du brevet: **08.09.1993**
(21) Numéro de dépôt: 90402353.8
(22) Date de dépôt: 24.08.1990
(51) Int. Cl.: B62D 55/075, B62D 55/065

(54) **Véhicule à propulseurs chenillés inclinables**
Fahrzeug mit neigbaren Kettenantrieben
Vehicle with tiltable endless track drives

(30) Priorité: 31.08.1989 FR 8911464
(43) Date de publication de la demande: 06.03.1991
(73) Titulaire: FRAMATOME, 92400 Courbevoie (FR)
(72) Inventeur: Clar, Georges, F-69006 Lyon (FR)
(74) Mandataire: Bourely, Paul

(56) Documents cités:
- EP-A- 0 197 020
- EP-A- 0 206 930
- CH-A- 463 973
- FR-A- 1 197 800

## Description

La présente invention concerne un véhicule muni de chenilles montées sur des propulseurs inclinables.

Elle trouve notamment application dans des installations industrielles lorsqu'une intervention est nécessaire mais serait dangereuse ou impossible pour un opérateur humain. Un véhicule selon la présente invention peut alors être utilisé. Pour cela il peut être muni d'instruments adéquats tels que des outils, des appareils de mesure, des caméras vidéo etc... ainsi que d'automatismes grâce auxquels il constitue un robot.

Un robot selon la présente invention peut être notamment utile dans une centrale nucléaire ou dans une usine de retraitement de combustible nucléaire lorsque des réparations ou des inspections doivent être faites dans des zones qui sont soumises à de fortes intensités de radiations ionisantes après certains incidents de fonctionnement. De tels robots peuvent cependant être également utiles dans d'autres industries, par exemple dans l'industrie chimique en présence de risques d'explosion, ou pour des missions de sécurité civile ou de surveillance de sites.

Une qualité importante d'un véhicule de ce genre est son aptitude à franchir des obstacles. Les obstacles à franchir peuvent présenter des formes très diverses, par exemple un escalier qui a été prévu pour l'homme et qui doit être monté ou descendu, ou un tuyau tombé sur un plancher, ou un couloir de faible largeur. La sûreté de tels véhicules lors du franchissement de tels obstacles présente deux, aspects principaux. L'un est la stabilité, c'est-à-dire l'aptitude du véhicule à ne pas basculer sous son propre poids et celui de sa charge. L'autre est l'adhérence et concerne chacun des propulseurs de ce véhicule, c'est-à-dire des organes qui prennent appui sur le sol pour soutenir et faire progresser ou immobiliser le véhicule. L'adhérence est l'aptitude de ces propulseurs à ne pas glisser excessivement au contact du sol, le mot sol désignant ici l'ensemble des éléments sur lesquels les propulseurs peuvent prendre appui.

Divers véhicules ont été conçus pour présenter une bonne aptitude à franchir avec sûreté de tels obstacles. Un premier véhicule est connu par le brevet européen EP 197 020 des ACEC qui décrit un véhicule téléguidé ou télécommandé constituant un robot pour inspections et interventions en milieux hostiles. Ce robot possède un ensemble moteur, c'est-à-dire des moyens de motorisation et de freinage, qui est intégré dans un châssis principal constituant un corps de véhicule. Il possède donc aussi des moyens pour transmettre le mouvement d'avance défini par cet ensemble moteur à des chenilles qui sont portées à l'extérieur du châssis par des organes de guidage fixés à ce châssis. Ce robot est équipé de deux châssis auxiliaires à l'avant et à l'arrière sur chacun desquels sont montées deux chenilles droite et gauche. Chaque châssis auxiliaire peut être incliné par rapport au châssis principal à partir de celui-ci. De ce fait, si le robot rencontre un obstacle frontal de hauteur modérée et sensiblement constante selon la direction transversale, il pourra le surmonter en conservant une position quasiment horizontale du châssis principal. Si par contre il rencontre un obstacle frontal de forte déclivité transversale, il risque en le franchissant de basculer sur le côté.

Un deuxième véhicule connu se déplace à l'aide de pieds qui ont une configuration de type "araignée" et qui lui permettent de franchir des petits obstacles de formes très variées. Mais il se déplace très lentement parce que chaque déplacement d'un pied de l'appareil doit être terminé avant de commencer celui du pied suivant.

Un troisième véhicule connu comporte quatre propulseurs chenillés inclinables par rapport au corps de ce véhicule. La chenille de chacun de ces propulseurs est guidée par un certain nombre d'organes de guidage, notamment par deux pignons dont l'un est un pignon moteur pour entraîner le mouvement d'avance de cette chenille. Ces organes sont portés par un palonnier qui constitue la structure de ce propulseur et qui est assemblé au corps du véhicule de manière à pouvoir être incliné autour d'un axe transversal. Le corps de ce véhicule porte des ensembles moteurs d'avance et d'inclinaison comportant des moteurs pour entraîner les uns les pignons moteur par l'intermédiaire de systèmes de transmission mécaniques et les autres les mouvements d'inclinaison des palonniers, respectivement. Ces ensembles comportent aussi des freins pour contrôler ces mouvements. Le corps du véhicule porte en outre des batteries d'alimentation en énergie électrique et des moyens de commande pour les ensembles moteurs.
Ce troisième véhicule connu a été proposé par la firme japonaise Mitsubishi sous le nom de MRV (Multifunctional Robot Vehicle) et a été décrit pages 425 et 426 du compte rendu de conférence "85 ICAR International Conference on Advanced Robotics, September 9-10, 1985, Tokyo, Japan, organized by : Robotics Society of Japan, The Society of Biomechanisms, Japan Industrial Robot Association".
Il semble permettre de franchir des obstacles de formes connues et sa vitesse moyenne de progression semble pouvoir être bien supérieure à celle du deuxième véhicule connu précédemment mentionné. Il présente cependant une grande complexité mécanique qui apparaît introduire des risques de pannes en service. Or, quand l'intervention d'un tel véhicule est demandée, il est souvent hautement souhaitable qu'elle soit effectuée rapidement ce qui oblige, lorsqu'on veut utiliser un premier véhicule, soit à disposer d'un deuxième véhicule pour pouvoir remplacer immédiatement le premier en cas de panne, soit à prévoir une intervention humaine dans des conditions de danger amenant à prendre des précautions indispensables dont le coût peut être très élevé. De telles obligations sont donc coûteuses. Par ailleurs l'encombrement des ensembles moteurs logés dans le corps du véhicule limite l'espace disponible pour loger les batteries électriques, ce qui limite l'autonomie du véhicule, ou oblige, si l'on veut que l'autonomie soit importante, à munir le véhicule d'un câble d'alimentation le reliant à une source d'énergie électrique fixe.

La présente invention a notamment pour buts de permettre à peu de frais de remédier rapidement à une éventuelle panne d'un véhicule du genre en question, et/ou de permettre de construire facilement un tel véhicule apte à franchir des obstacles de formes variées tout en ayant une vitesse moyenne de progression élevée.

Selon la présente invention, de tels buts peuvent être atteints à l'aide d'un véhicule à propulseurs chenillés chaque chenille étant inclinable par rapport à un axe transversal du véhicule dans lequel chacun de ces propulseurs intègre les ensembles moteurs d'avance et d'inclinaison correspondants et est assemblé au corps du véhicule de manière à être facilement amovible.

Une telle intégration oblige, pour être utile, à concevoir des ensembles moteurs suffisamment puissants qui puissent être montés de manière simple dans le volume limité du propulseur, et cela malgré la complexité d'un tel ensemble qui comporte typiquement un moteur électrique, un réducteur mécanique et un frein à commande électrique. Mais elle présente divers avantages :
- Il n'est plus nécessaire de prévoir des moyens de transmission mécaniques entre le corps du véhicule et le propulseur, mais seulement des moyens de transmission électriques.
- Alors que les pannes les plus probables susceptibles d'empêcher l'utilisation du véhicule affectent les organes mécaniques cinématiques, c'est-à-dire ceux qui comportent des pièces en mouvement relatif, la totalité de ces organes est intégrée dans les propulseurs facilement amovibles et remplaçables, de sorte qu'une telle panne peut être facilement palliée par remplacement du seul propulseur affecté, sous la seule condition de disposer préalablement d'un propulseur de rechange dont le coût est beaucoup plus faible que celui du véhicule entier. De plus, dans le cas d'un véhicule télécommandé typique muni de quatre propulseurs, si un propulseur de ce véhicule tombe en panne dans une zone inaccessible à l'homme, par exemple parce que fortement contaminée par des produits radioactifs, il est possible de ramener le véhicule dans une zone accessible à l'homme à l'aide des trois propulseurs qui restent opérationels. Il est même le plus souvent possible d'éviter ce faisant que le propulseur défaillant frotte sur le sol. Il suffit pour cela d'incliner convenablement les trois propulseurs opérationels tout en diminuant autant que possible l'inclinaison du propulseur défaillant. Lorsque le véhicule est arrivé dans la zone accessible à l'homme, le propulseur défaillant est remplacé et le véhicule est à nouveau opérationnel.
- Le corps du véhicule et les propulseurs peuvent être transportés et stockés indépendamment, ce qui facilite la logistique des interventions.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

Ces figures représentent :
- Figure 1 : vue de profil d'un premier véhicule d'intervention selon la présente invention,
- Figure 2 : vue de dessus de ce véhicule,
- Figure 3 : vue de face d'un propulseur de ce véhicule d'intervention,
- Figure 4 : vue de dessus de ce propulseur après enlèvement de la chenille et de certains pignons de guidage pour faire apparaître un pignon d'entraînement, une articulation et un pignon de guidage d'extrémité,
- Figures 4A, 4B, 4C : vues de dessus en coupe diamétrales à échelle agrandie de ce pignon d'entraînement, de cette articulation et de ce pignon de guidage,
- Figure 5 : vue de dessus en coupe des moyens d'assemblage du palonnier de ce propulseur au corps du véhicule,
- Figure 6 : vue de face en coupe des raccords de ces moyens d'assemblage,
- Figure 7 : exemple d'utilisation de ce véhicule d'intervention, vu de face, avec maintien du corps de véhicule à l'horizontale, dans un passage étroit et encombré,
- Figure 8 : exemple d'utilisation de ce véhicule d'intervention, vu de face, dans un passage en forte déclivité,
- Figure 9 : vue de profil de ce véhicule dans le passage de la figure 8,
- Figure 10 : vue de côté d'un deuxième véhicule d'intervention selon la présente invention, comportant deux propulseurs chenillés inclinables et une roue libre,
- Figure 11 : vue de côté d'un troisième véhicule d'intervention selon la présente invention, apte à franchir des crevasses.

On va d'abord indiquer diverses dispositions qui sont de manière générale préférées selon la présente invention. Ces dispositions sont toutes appliquées dans les trois véhicules d'intervention mentionnés ci-dessus selon cette invention, sauf en ce qui concerne le nombre des propulseurs du deuxième de ces véhicules, mais il doit être compris que certains autres véhicules selon cette invention pourraient n'appliquer que certaines de ces dispositions préférées.

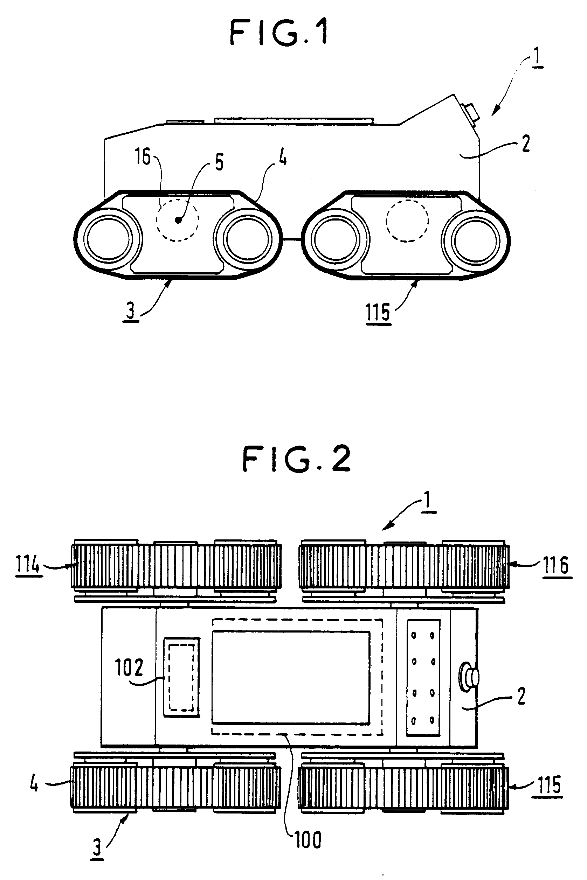

L'une de ces dispositions est commune à ces véhicules selon la présente invention et au troisième véhicule connu précédemment mentionné (MRV). On pourra se référer aux figures 1 à 5.

Selon cette disposition le véhicule comporte :
- un corps de véhicule 2
- plusieurs propulseurs 3 assemblés audit corps de véhicule pour exercer des actions de portage et de propulsion dudit véhicule, chacun de ces propulseurs présentant une longueur selon un axe longitudinal 12 et comportant :
- une chenille 4 prenant appui sur le sol et animée d'un mouvement d'avance en boucle autour de ce propulseur dans un plan contenant cet axe longitudinal pour déplacer ce propulseur par rapport au sol,
- des organes de guidage de chenille 6, 7, 9, 10 pour guider ledit mouvement d'avance de ladite chenille,
- un pignon moteur 6 pouvant avoir un mouvement de rotation pour entraîner ledit mouvement d'avance de ladite chenille de manière à réaliser ladite action de propulsion,
- un palonnier 18 pour porter lesdits organes de guidage et ledit pignon moteur 6,
- et des moyens d'assemblage de palonnier pour assembler ce palonnier 18 audit corps de véhicule 2, ces moyens comportant une articulation 16 permettant un mouvement d'inclinaison de ce palonnier par rapport à ce corps par rotation autour d'un axe d'articulation 5 direction transversale,
- ce véhicule comportant encore :
- des ensembles moteurs d'avance 22, 23, 21 correspondant chacun à l'un desdits propulseurs pour entraîner ou limiter la rotation dudit pignon moteur 6 de ce propulseur,
- des ensembles moteurs d'inclinaison 38, 37, 36A correspondant chacun à l'un desdits propulseurs pour entraîner ou freiner ledit palonnier de ce propulseur dans lesdits mouvements d'inclinaison,
- des moyens d'alimentation en énergie 100 pour fournir l'énergie nécessaire auxdits ensembles moteurs d'avance et d'inclinaison,
- et des moyens de commande 102, 13 pour fournir des signaux de commande auxdits ensembles moteurs d'avance et d'inclinaison de manière à coordonner les actions de portage et de propulsion desdits propulseurs, certains au moins de ces moyens de commande étant des moyens de commande centraux (102) portés par ledit corps de véhicule pour fournir des signaux de coordination auxdits propulseurs.

D'autres dispositions sont nouvelles :
- Lesdits ensembles moteurs d'avance 22, 23, 21 et d'inclinaison 38, 37, 36A correspondant à un dit propulseur 3 sont montés sur ledit palonnier 18 de ce propulseur,
   - lesdits moyens d'assemblage de palonnier comportant, outre ladite articulation 16, un dispositif de fixation amovible 17 permettant d'effectuer facilement une succession de retraits et d'assemblages de ce palonnier par rapport audit corps de véhicule 2,
   - ce véhicule comportant encore, en correspondance avec chacun desdits propulseurs, des moyens de transmission 108, 110, 44, 45, pour transmettre au moins lesdits signaux de coordination entre lesdits moyens de commande centraux 102 portés par ledit corps de véhicule 2 et ledit propulseur, ces moyens de transmission comportant des éléments déformables 110 pour supporter au moins lesdits mouvements d'inclinaison et des fiches de connexion complémentaires séparables 44, 45 pour permettre à ces moyens de fonctionner à nouveau après un retrait provisoire de ce palonnier. Le montage des ensembles moteurs sur le palonnier est tel que les moyens d'assemblage et l'ensemble moteur d'inclinaison portent,guident et entraînent le palonnier et que ce dernier porte et guide le pignon moteur ainsi que l'ensemble moteur d'avance qui entraîne ce pignon. Chacun de ces ensembles moteurs comporte par exemple un moteur électrique, un réducteur de vitesse mécanique et un frein à commande électrique, mais le réducteur et le frein pourraient être éventuellement réalisés autrement ou ailleurs. Quant aux éléments déformables des moyens de transmission ce sont par exemple des fils souples.
- Lesdits moyens d'alimentation en énergie 100 sont portés par ledit corps de véhicule 2, lesdits moyens de transmission 108, 110, 44, 45, étant aussi prévus pour transmettre auxdits ensembles moteurs d'avance 22, 23, 21 et d'inclinaison 38, 37, 36A l'énergie qui leur est nécessaire. Ces moyens d'alimentations en énergie sont par exemple des batteries électriques. Le fait que le corps du véhicule n'ait pas à loger les ensembles moteurs permet d'y loger un volume important de batteries pour augmenter l'autonomie du véhicule.
- Chaque dit propulseur 3 est sensiblement contenu dans un volume plat entouré par ladite chenille 4, cette dernière présentant la forme générale d'un ruban et ayant une longueur en forme de boucle et une largeur, une surface et une épaisseur de ce volume plat étant respectivement définis par cette boucle et par cette largeur.
- Ledit palonnier 18 présente la forme générale d'une plaque dont la surface a une longueur selon ladite direction longitudinale 12 et une hauteur, ledit corps de véhicule 2 se trouvant d'un côté interne de cette plaque, lesdits organes de guidage 6, 7, 9, 10, pignon moteur 6 et ensembles moteurs 22, 23, 21, 38, 37, 36A étant montés sur ce palonnier d'un côté externe de cette plaque.
- Ladite articulation de palonnier 16 comporte :
   - un moyeu d'articulation 34 tubulaire présentant un axe constitué par ledit axe d'articulation 5 et formant un volume central situé au moins majoritairement dudit côté externe dudit palonnier 18 entre une extrémité externe ouverte et une extrémité interne disposée en regard dudit corps de véhicule 2, cette extrémité interne constituant une partie d'un conduit d'articulation 106 s'étendant selon cet axe,
   - une cage d'articulation 39 entourant coaxialement ledit moyeu d'articulation et portant ledit palonnier 18,
   - et des paliers constitués par des roulements à billes 39A et 39B pour guider ladite cage d'articulation en rotation autour dudit moyeu d'articulation,
   - ledit dispositif de fixation d'articulation 17 présentant une forme tubulaire et s'étendant coaxialement dans le prolongement dudit moyeu d'articulation pour compléter ledit conduit d'articulation,
   - lesdits moyens de transmission comportant :
   - des moyens de transmission centraux 108 liés audit corps de véhicule 2,
   - des moyens de transmission périphériques 110 liés audit palonnier 18,
   - et des moyens de raccordement de transmission 44, 45, passant par ledit conduit d'articulation 106 et situés au voisinage dudit dispositif de fixation d'articulation pour connecter de manière facilement amovible lesdits moyens de transmission périphériques auxdits moyens de transmission centraux.
- Ledit dispositif de fixation d'articulation 17 comporte deux raccords tubulaires qui sont un raccord mâle 41 et un raccord femelle 40 et qui sont coaxialement montés l'un à ladite extrémité interne du moyeu d'articulation 34, l'autre audit corps de véhicule 2, ledit raccord femelle 40 comportant des tenons 50 qui forment des saillies radiales vers l'intérieur et qui sont répartis angulairement autour dudit axe d'articulation 5 en laissant entre eux des intervalles de passage, ledit raccord mâle 41 comportant des tenons 52 qui forment des saillies radiales vers l'extérieur et qui sont répartis angulairement autour dudit axe d'articulation en laissant entre eux des intervalles de passage, de manière qu'une dite opération d'assemblage puisse se faire d'abord par une opération de pénétration coaxiale dudit raccord mâle dans ledit raccord femelle avec passage desdits tenons de chacun de ces raccords par lesdits intervalles de passage de l'autre, puis par une opération de rotation d'assemblage au cours de laquelle l'un de ces raccords tourne par rapport à l'autre d'un angle de rotation d'assemblage autour dudit axe d'articulation 5 jusqu'à amener les tenons de chacun de ces raccords en coïncidence angulaire avec ceux de l'autre pour empêcher une extraction dudit raccord mâle, une dite opération de retrait se faisant par les opérations inverses.
- L'un des deux dits raccords tubulaire (le raccord femelle 40) est monté rotatif de manière que ladite opération de rotation d'assemblage soit une rotation affectant seulement ce raccord. Une rotation intempestive de ce raccord est empêchée de manière connue par frottement ou par encliquetage. Cette opération de rotation d'assemblage est effectuée à l'aide d'une clé à fourche plate que l'on fait passer dans l'intervalle plat qui existe entre le palonnier 18 et la paroi en regard du corps de véhicule 2.
- Lesdits moyens de raccordement de transmission comportent deux bases de raccordement de transmission portées l'une 43 par ledit moyeu d'articulation 34 l'autre 46 par ledit corps de véhicule 2 en regard l'une de l'autre coaxialement autour dudit axe d'articulation 5, chacune de ces bases 43 portant des fiches de connexion 44 réparties angulairement autour de cet axe et aptes à coopérer avec des fiches de connexion complémentaires 45 portées par l'autre de ces bases 46 pour permettre la transmission desdits signaux de coordination.
- Ledit ensemble moteur d'inclinaison 38, 37, 36A est au moins partiellement disposé coaxialement dans ledit volume central du moyeu d'articulation 34, cet ensemble prenant appui d'une part sur ce moyeu et d'autre part, en passant à travers ladite extrémité externe ouverte de ce moyeu, sur ladite cage d'articulation 39 pour entraîner ou freiner la rotation de cette cage par rapport à ce moyeu.
- Ledit pignon moteur 6 est muni :
   - d'un moyeu d'entraînement 19 tubulaire à axe transversal formant un volume central entre une extrémité interne fixée audit palonnier 18 et une extrémité externe ouverte,
   - et de paliers 26, 26A pour guider la rotation de ce pignon autour de ce moyeu,
   - ledit ensemble moteur d'avance 22, 23, 21 étant au moins partiellement disposé coaxialement dans ledit volume central du moyeu d'entraînement 34, cet ensemble prenant appui d'une part sur ce moyeu et d'autre part, à travers ladite extrémité externe de ce moyeu, sur ledit pignon moteur pour entraîner ou freiner la rotation de ce pignon par rapport à ce moyeu.
- Lesdits organes de guidage de chenille 6, 7, 9, 10 comprennent deux pignons crantés qui sont situés aux deux extrémités longitudinalement opposées dudit propulseur 3 et dont des crans coopèrent avec des crans de ladite chenille 4, l'un de ces pignons (6A) constituant la partie active dudit pignon moteur 6, l'autre étant un pignon de guidage d'extrémité à rotation libre 7 et étant muni d'un moyeu de guidage tubulaire 27 à axe transversal formant un volume central entre une extrémité interne fixée audit palonnier 18 et une extrémité externe ouverte,
- un capteur d'avance 15 étant disposé dans ledit volume central dudit moyeu de guidage et étant reliée d'une part à ce moyeu, d'autre part à ce pignon en passant par ladite extrémité externe de ce moyeu pour fournir un signal de mesure d'avance représentatif de la rotation de ce pignon par rapport à ce moyeu.
- Ledit propulseur comporte en outre une tige de transmission d'inclinaison 70 s'étendant selon ledit axe d'articulation 5 d'une extrémité externe fixée à ladite cage d'articulation 39 à travers ladite extrémité externe ouverte dudit moyeu d'articulation 34 jusqu'à une extrémité interne située dans ledit conduit d'articulation 106,
   - et un capteur d'inclinaison 33 fixé entre d'une part ladite extrémité interne de ladite tige de transmission d'inclinaison et d'autre part ledit moyeu d'articulation 34 pour fournir un signal de mesure d'inclinaison représentatif de l'inclinaison dudit palonnier 18,
   - ledit ensemble moteur d'inclinaison 38, 37, 36A entourant ladite tige de transmission d'inclinaison.
- Le véhicule comporte quatre propulseurs avant droit 3, avant gauche, 114 arrière droit 115 et arrière gauche 116, lesdits propulseurs avant droit et arrière droit étant symétriques desdits propulseurs avant gauche et arrière gauche.

On va maintenant décrire plus spécifiquement les éléments du premier véhicule selon la présente invention qui sont représentés sur les figures.
Conformément à la figure 1 un véhicule d'intervention 1 est essentiellement formé d'un corps de véhicule constituant une structure porteuse 2 sur laquelle sont montés quatre propulseurs tels que 3 destinés à entraîner le véhicule par l'intermédiaire de chenilles crantées telles que 4 qui peuvent avoir un mouvement d'avance dans les deux sens opposés selon une flèche 4A. Les structures de ces propulseurs sont constituées par des palonniers qui sont montés autour d'axes d'articulations tels que 5 autour desquels ils sont mobiles indépendamment en rotation selon une flèche 5A. Le profil et les mouvements de chaque propulseur étant ceux de son palonnier, des indications relatives à un propulseur seront parfois données ci-après en se référant seulement à ce palonnier. La structure porteuse 2 est une caisse qui est aménagée pour contenir des batteries 100 (voir figure 2) constituant des moyens d'alimentation en énergie destinés à fournir la puissance nécessaire au fonctionnement du véhicule. Cette caisse contient aussi des moyens de réception radio électrique et d'élaboration des tensions électriques utilisés pour ce fonctionnement, et des moyens de commande centraux 102 commandant la transmission des tensions fournies par ces moyens d'élaboration. La charge en batteries est importante ce qui confère une très importante autonomie au robot constitué à l'aide de ce véhicule. Des consignes de fonctionnement sont transmises au véhicule par voie hertzienne, et la progression du véhicule équipé de caméra est suivie sur un écran de contrôle situé dans une zone protégée accessible à l'homme.

Le véhicule est équipé des dispositifs utiles bien connus des spécialistes tels qu'un dispositif de contrôle de charge, un inclinomètre, un bras mobile pour montage d'outillage, et des moyens de contrôle et/ou d'enregistrement.

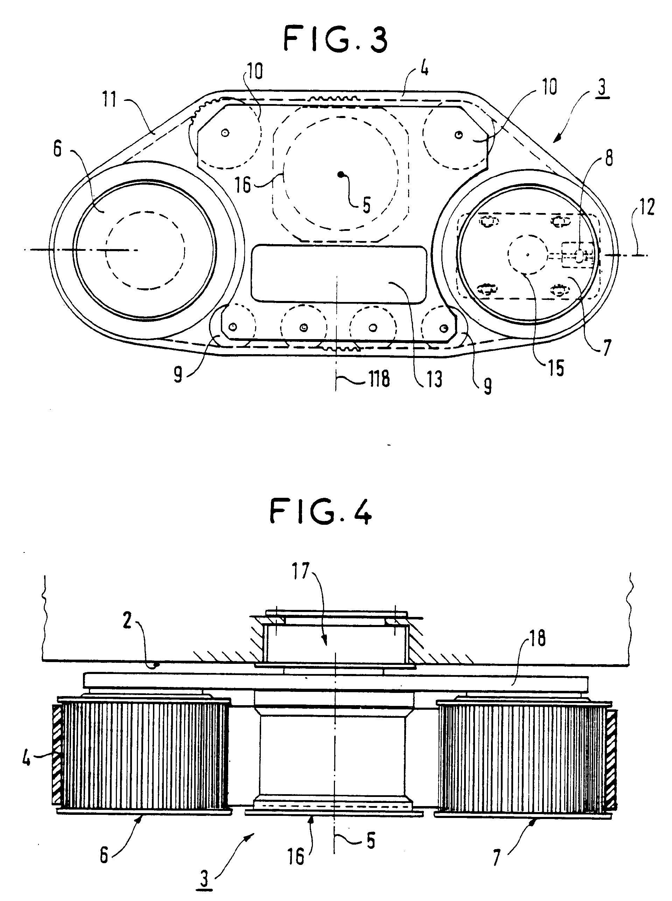

Conformément à la figure 3, la chenille crantée 4 est entraînée par un pignon moteur 6 dans un mouvement d'avance autour du palonnier 3. Elle est guidée par un pignon de guidage d'extrémité 7 équipé d'un codeur 15 et d'un système de mise en tension 8 pour la tendre. A la base du palonnier sont placés dans un plan horizontal quatre petits pignons 9 de guidage de la chenille.

En partie supérieure la chenille crantée est guidée par deux autres pignons 10 et 10A. Les génératrices extérieures de ces pignons définissent l'encombrement global du propulseur. Des couvercles 11 fixés sur les pignons maintiennent latéralement la chenille crantée sur le propulseur.

Le propulseur en fonctionnement ou à l'arrêt peut tourner autour de l'axe d'articulation 5, de façon qu'un axe longitudinal 12 lié à ce propulseur soit horizontal en position normale d'appui et incliné lorsque le propulseur est en appui sur la chenille crantée 4 au niveau du pignon moteur 6 ou à celui du pignon de guidage d'extrémité 7. Un logement aisément accessible est prévu dans le propulseur pour loger un module électronique 13 alimentant et commandant les ensembles moteurs inclus dans ce propulseur et faisant partie desdits moyens de commande.

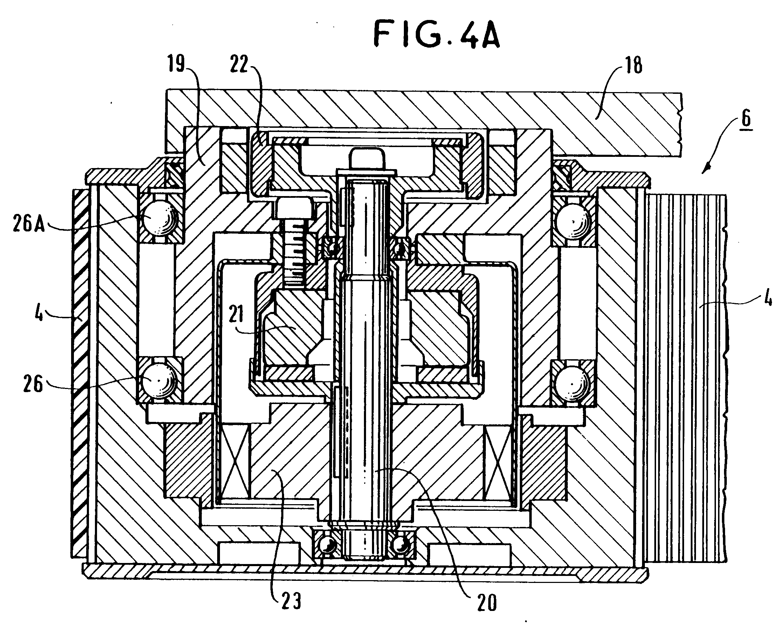

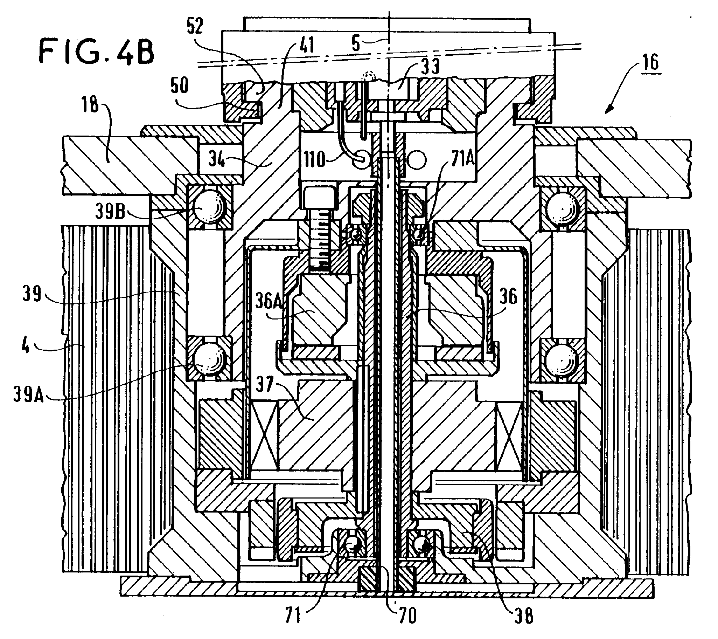

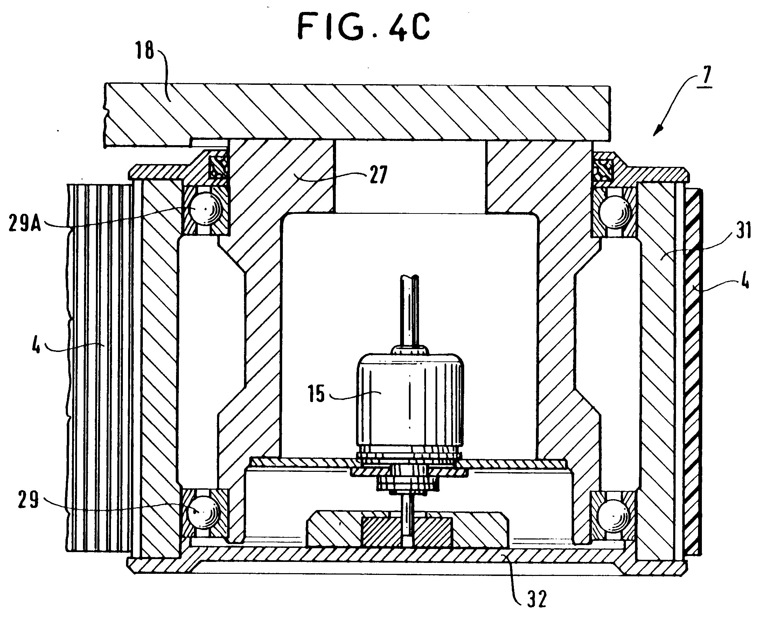

La figure 4 est une vue de dessus en coupe du propulseur 3. Le palonnier est essentiellement constitué d'un corps 18 en forme de plaque sur lequel sont montés le pignon moteur 6, le pignon de guidage d'extrémité 7 et l'articulation 16 munie de son dispositif de fixation 17 sur la structure porteuse 2.

Conformément à la figure 4A le pignon moteur 6 est muni d'un moyeu 19 constituant ledit moyeu d'entraînement et fixé sur le palonnier 18. A l'intérieur du moyeu 19 est monté un axe tournant 20 sur lequel est monté un frein 21, un moteur 22 et un réducteur 23 lié d'une part à l'axe tournant 20 et d'autre part au pignon cranté 6A qui constitue la partie active de l'ensemble formé par le pignon moteur 6 et qui entraîne la chenille 4 qui est munie pour cela de crans en correspondance. Des paliers constitués par des roulements à billes 26 et 26A guident la rotation de ce pignon cranté autour de ce moyeu.

Conformément à la figure 4C, le pignon de guidage d'extrémité 7 est muni d'un moyen tubulaire 27 qui est fixé sur le palonnier 18 et dans le volume central duquel est monté le capteur d'avance 15. A l'extérieur du moyeu 27 des roulements 29 et 29A fixés sur le moyeu 27 guident la rotation que le pignon 7 effectue en étant entraîné par la chenille 4. Un couvercle 32 est fixé sur le pignon 7 et relié à l'axe du capteur 15.

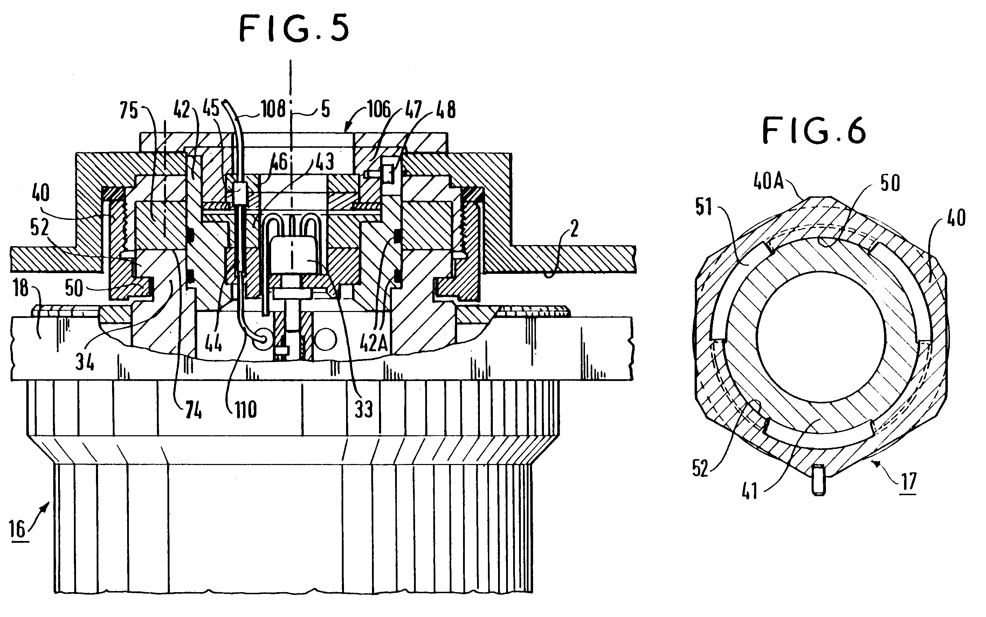

Conformément à la figure 4B, l'articulation 16 comporte un moyeu d'articulation 34 comprenant à son extrémité interne des moyens de fixation sur la structure porteuse 2, qui seront décrits à l'aide de la figure 6. Ce moyeu porte dans son volume central un arbre tubulaire 36 sur lequel est placé un frein 36A. Sur cet arbre tubulaire 36 est fixé également un réducteur 37 qui permet d'abaisser la vitesse de rotation du palonnier à une valeur très inférieure à celle du moteur d'inclinaison 38; Ce réducteur 37 est lui-même couplé au moteur 38 par l'intermédiaire de l'arbre tubulaire 36 positionné sur des paliers constitués par des roulements 71 et 71A. Des roulements à billes 39A et 39B guident le mouvement rotatif de la cage d'articulation 39 autour du moyeu 34. Cette cage 39 est assemblée par vis sur le palonnier 18.

Une tige tubulaire de transmission d'inclinaison 70 est placée à l'intérieur de l'arbre tubulaire 36. Une extrémité de cette tige permet la fixation du capteur d'inclinaison 33 qui permet de connaître instantanément l'inclinaison du palonnier par rapport au corps du véhicule.

La figure 5 est une vue en coupe du dispositif qui permet d'assembler rapidement le palonnier 18 au corps de véhicule 2. Un raccord femelle 40 est monté sur ce corps par un ensemble de pièces annexes permettant une rotation de ce raccord par rapport a ce corps pour permettre la rotation d'assemblage précédemment mentionnée. Le raccord mâle 41 est usiné sur l'extrémité interne du moyeu 34 qui fait saillie du côté interne du palonnier 18 de manière à pouvoir être emboîté dans le raccord femelle 40 à oreilles. Conformément à la figure 6, le moyeu 34 est alors bloqué par ce raccord femelle. Pour cela, lors de la mise en place du propulseur, les trois tenons 52 du raccord mâle 41 sont placés en vis-à-vis des intervalles 51 qui séparent les trois tenons 50 du raccord femelle 40. Après pénétration coaxiale du raccord mâle dans le raccord femelle, on applique au raccord 40, à l'aide d'une clé à fourche plate coopérant avec des méplats 40A formés sur la surface extérieure de ce raccord (voir figure 6), une rotation dudit angle de rotation d'assemblage qui vaut environ 60 degrés. Les faces coniques des tenons 50 du raccord femelle 40 viennent alors coopérer avec les faces coniques des tenons 52 de manière à réaliser le blocage des tenons 50 liés au palonnier contre une face d'appui 74 (visible sur la figure 5) d'une bague 75 liée à la structure porteuse 2. On réalise ainsi une solidarisation du propulseur sur la structure porteuse 2.

Conformément encore à la figure 5 un support 42 en forme de douille circulaire est vissé à l'intérieur d'un alésage du moyeu 34. Il porte un couvercle 43 qui constitue une base pour l'implantation de fiches de connexion électrique femelles 44. Les fiches mâles complémentaires 45 sont fixées sur une base complémentaire constituée par une bague 46 implantée sur un support 47 en forme de douille circulaire, lui-même assemblé coaxialement au raccord femelle 40 sur la structure porteuse 2. Le périmètre d'implantation des fiches est coaxial à ces raccords et comprend 22 connecteurs dont 2 détrompeurs. Les détrompeurs mécanique 48 et électrique (non représentés) permettent d'orienter correctement le propulseur lors de sa mise en place, afin d'effectuer l'assemblage mécanique du palonnier à la structure porteuse ainsi que la connexion électrique des moyens de transmission centraux tels que le fil 108 et périphériques tels que le fil 110. Des joints toriques 42A placés sur le support 42 garantissent l'étanchéité du montage.

Le support circulaire 42 solidaire du moyeu 34 permet de centrer et guider le palonnier par l'intermédiaire de la bague 75 lors de sa mise en place sur la structure porteuse 2.

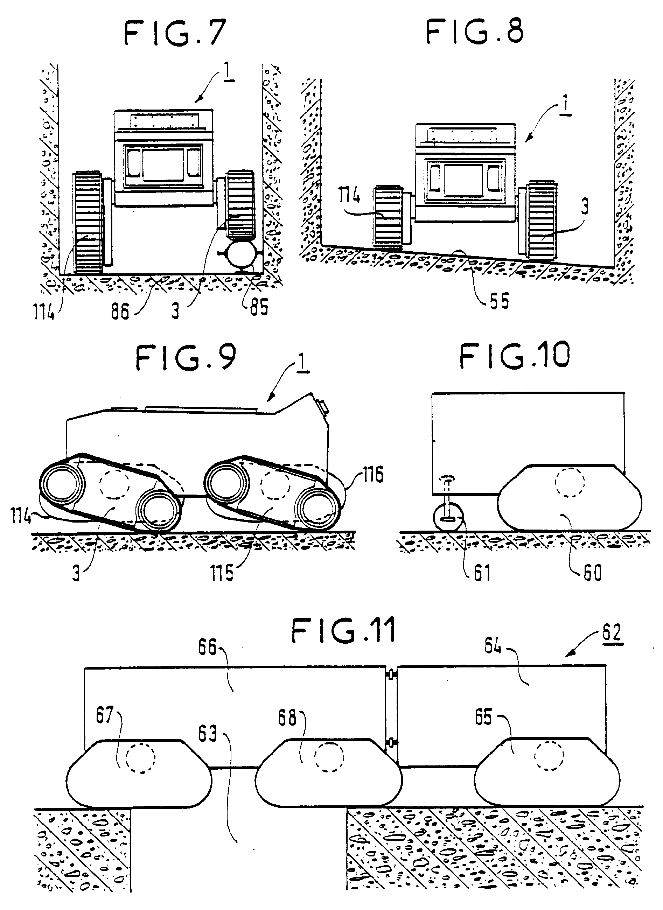

La figure 7 montre le véhicule d'intervention 1 dans un passage étroit, tel que l'on en rencontre dans les centrales nucléaires. Ses propulseurs indépendants permettent de le maintenir en position horizontale lorsqu'il franchit les obstacles. Les propulseurs tels que 3 qui évoluent sur une tuyauterie 85 sont en position horizontale tandis que ceux tels que 114 qui évoluent sur le plancher 86 sont en position relevée.

Les figures 8 et 9 montrent le véhicule d'intervention 1 évoluant sur un plan incliné 55 ; les propulseurs tels que 114 qui sont placés dans la partie haute du plan incliné sont en position horizontale tandis que ceux tels que 3 qui sont placés dans la partie basse du plan incliné sont en position inclinée. On comprendra que toute les combinaisons d'inclinaison des propulseurs peuvent être utilisées pour répondre aux différentes configurations de sol rencontrées par le véhicule d'intervention lors de son parcours.

La figure 10 montre un exemple de réalisation d'un véhicule d'intervention sur un sol à configuration plane ou de faible inclinaison, pouvant évoluer dans toutes les directions en tournant sur place. Ce véhicule d'intervention ne comporte que deux propulseurs chenillés 60 et une ou deux roues libres 61.

La figure 11 est une vue d'un véhicule d'intervention 62 capable de franchir des crevasses 63. Un équipement modulaire 64 comportant un train de propulseurs chenillés 65 est raccordé solidairement sur un module de base 66 comportant deux trains de propulseurs 67 et 68. Cette disposition permet au véhicule d'intervention de franchir des crevasses d'une largeur sensiblement plus importante que la distance séparant deux trains de propulseurs.

Le véhicule d'intervention selon la présente invention présente les avantages suivants :
Il peut évoluer dans un environnement hostile durant plusieurs heures en étant commandé à distance. Son énergie lui est fournie par les batteries stockées dans la structure porteuse qui est exempte de tout organe mécanique. Les informations nécessaires peuvent lui être transmises par des moyens de transmission connus et communément utilisés. Sa conception lui permet d'évoluer et se déplacer dans un élément tel que l'eau, puisqu'il est entièrement étanche. Les composants électroniques sont noyés dans des matériaux appropriés pour les protéger quand le véhicule évolue dans des milieux fortement irradiés.

Le véhicule d'intervention peut être utilisé dans une centrale nucléaire :
. Pour réaliser des inspections routinières,
   - inspection par télévision classique ou en relief,
   - analyse de l'environnement tel que humidité, température, rayonnement, contamination, bruits.
. Intervention sur le réacteur en fonctionnement tel que par exemple :
   - aide à la décision,
   - colmatage d'une fuite sur une tuyauterie,
   - réglage d'une vanne.
. Intervention sur un réacteur à l'arrêt, par exemple après accident, telle que par exemple :
   - décontamination,
   - évacuation de matériels fortement irradiés,
   - mise en place de protection, ou d'écrans,
   - intervention en zone très irradiée,
   - démantélement de la centrale à la fin de sa durée d'utilisation.

Il peut aussi être utilisé dans l'industrie chimique pour y effectuer par exemple les interventions suivantes :
- ronde de surveillance d'anomalies,
- contrôle de l'atmosphère,
- détection de fumée ou de flammes.

Il peut encore être utilisé dans un établissement pénitencier pour y effectuer une ronde de surveillance sur un circuit prédéterminé ou modifié selon la demande d'un opérateur, pour contrôle d'un point particulier.

Pour toutes ces interventions le véhicule est équipé de manière spécifique, par exemple : bras mobile pour recevoir différents outillages ou moyens de contrôle. Il peut fonctionner automatiquement et a l'aptitude de venir recharger ses batteries selon ses besoins en un point fixe.

Comme le montre la description ci-dessus, ce véhicule d'intervention présente de nombreux avantages. Sa maintenance est rapide et facilitée grâce à la démontabilité rapide des propulseurs. L'indépendance de ces derniers lui permet de franchir des obstacles difficiles qu'un robot de type classique ne pourrait pas franchir. Son caractère modulaire lui permet de pouvoir s'adapter à des cas spécifiques à l'aide de propulseurs chenillés de différentes dimensions.

## Revendications

1. Véhicule à propulseurs chenillés chaque chenille étant inclinable par rapport à un axe transversal du véhicule, caractérisé par le fait que chacun de ses propulseurs intègre les ensembles moteurs d'avance et d'inclinaison correspondants et est assemblé de manière facilement amovible au corps du véhicule.

2. Véhicule à propulseurs chenillés inclinables, ce véhicule comportant
- un corps de véhicule (2)
- plusieurs propulseurs (3) assemblés audit corps de véhicule pour exercer des actions de portage et de propulsion dudit véhicule, chacun de ces propulseurs présentant une longueur selon un axe longitudinal (12) et comportant :
- une chenille (4) prenant appui sur le sol et animée d'un mouvement d'avance en boucle autour de ce propulseur dans un plan contenant cet axe longitudinal pour déplacer ce propulseur par rapport au sol,
- des organes de guidage de chenille (6, 7, 9, 10) pour guider ledit mouvement d'avance de ladite chenille,
- un pignon moteur (6) pouvant avoir un mouvement de rotation pour entraîner ledit mouvement d'avance de ladite chenille de manière à réaliser ladite action de propulsion,
- un palonnier (18) pour porter lesdits organes de guidage et ledit pignon moteur (6),
- et des moyens d'assemblage de palonnier pour assembler ce palonnier (18) audit corps de véhicule (2), ces moyens comportant une articulation (16) permettant un mouvement d'inclinaison de ce palonnier par rapport à ce corps par rotation autour d'un axe d'articulation (5) de direction transversale,
- ce véhicule comportant encore :
- des ensembles moteurs d'avance (22, 23, 21) correspondant chacun à l'un desdits propulseurs pour entraîner ou limiter la rotation dudit pignon moteur (6) de ce propulseur,
- des ensembles moteurs d'inclinaison (38, 37, 36A) correspondant chacun à l'un desdits propulseurs pour entraîner ou freiner ledit palonnier de ce propulseur dans lesdits mouvements d'inclinaison,
- des moyens d'alimentation en énergie (100) pour fournir l'énergie nécessaire auxdits ensembles moteurs d'avance et d'inclinaison,
- et des moyens de commande (102, 13) pour fournir des signaux de commande auxdits ensembles moteurs d'avance et d'inclinaison de manière à coordonner les actions de portage et de propulsion desdits propulseurs, certains au moins de ces moyens de commande étant des moyens de commande centraux (102) portés par ledit corps de véhicule pour fournir des signaux de coordination,
ce véhicule étant caractérisé par le fait que lesdits ensembles moteurs d'avance (22, 23, 21) et d'inclinaison (38, 37, 36A) correspondant a un dit propulseur (3) sont montés sur ledit palonnier (18) de ce propulseur,
- lesdits moyens d'assemblage de palonnier comportant, outre ladite articulation (16), un dispositif de fixation amovible (17) permettant d'effectuer facilement une sucession de retraits et d'assemblages de ce palonnier par rapport audit corps de véhicule (2),
- ce véhicule comportant encore, en correspondance avec chacun desdits propulseurs, des moyens de transmission (108, 110, 44, 45) pour transmettre au moins lesdits signaux de coordination entre lesdits moyens de commande centraux (102) portés par ledit corps de véhicule (2) et ledit propulseur, ces moyens de transmission comportant des éléments déformables (110) pour supporter au moins lesdits mouvements d'inclinaison et des fiches de connexion complémentaires séparables (44, 45) pour permettre à ces moyens de fonctionner à nouveau après un retrait provisoire de ce palonnier.

3. Véhicule selon la revendication 2, caractérisé par le fait que lesdits moyens d'alimentation en énergie (100) sont portés par ledit corps de véhicule (2), lesdits moyens de transmission (108, 110, 44, 45) étant aussi prévus pour transmettre auxdits propulseurs (3) l'énergie qui leur est nécessaire.

4. Véhicule selon la revendication 2, caractérisé par le fait que chaque propulseur (3) est sensiblement contenu dans un volume plat entouré par ladite chenille (4), cette dernière présentant la forme générale d'un ruban et ayant une longueur en forme de boucle et une largeur, une surface et une épaisseur de ce volume plat étant respectivement définis par cette boucle et par cette largeur.

5. Véhicule selon la revendication 2, caractérisé par le fait que ledit palonnier (18) présente la forme générale d'une plaque dont la surface a une longueur selon ladite direction longitudinale (12) et une hauteur, ledit corps de véhicule (2) se trouvant d'un côté interne de cette plaque, lesdits organes de guidage (6, 7, 9, 10), pignon moteur (6) et ensembles moteurs (22, 23, 21, 38, 37, 36A) étant montés sur ce palonnier d'un côté externe de cette plaque.

6. Véhicule selon la revendication 5, caractérisé par le fait que ladite articulation de palonnier (16) comporte :
- un moyeu d'articulation (34) tubulaire présentant un axe constitué par ledit axe d'articulation (5) et formant un volume central situé au moins majoritairement dudit côté externe dudit palonnier (18) entre une extrémité externe ouverte et une extrémité interne disposée en regard dudit corps de véhicule (2), cette extrémité interne constituant une partie d'un conduit d'articulation (106) s'étendant selon cet axe,
- une cage d'articulation (39) entourant coaxialement ledit moyeu d'articulation et portant ledit palonnier (18),
- et des paliers (39, 39A) pour guider ladite cage d'articulation en rotation autour dudit moyeu d'articulation,
- ledit dispositif de fixation d'articulation (17) présentant une forme tubulaire et s'étendant coaxialement dans le prolongement dudit moyeu d'articulation pour compléter ledit conduit d'articulation,
- lesdits moyens de transmission comportant :
- des moyens de transmission centraux (108) liés audit corps de véhicule (2),
- des moyens de transmission périphériques (110) liés audit palonnier (18),
- et des moyens de raccordement de transmission (44, 45) passant par ledit conduit d'articulation (106) et situés au voisinage dudit dispositif de fixation d'articulation pour connecter de manière facilement amovible lesdits moyens de transmission périphériques auxdits moyens de transmission centraux.

7. Véhicule selon la revendication 6, caractérisé par le fait que ledit dispositif de fixation d'articulation (17) comporte deux raccords tubulaires qui sont un raccord male (41) et un raccord femelle (40) et qui sont coaxialement montés l'un à ladite extrémité interne du moyeu d'articulation (34), l'autre audit corps de véhicule (2), ledit raccord femelle (40) comportant des tenons (50) qui forment des saillies radiales vers l'intérieur et qui sont répartis angulairement autour dudit axe d'articulation (5) en laissant entre eux des intervalles de passage, ledit raccord male (41) comportant des tenons (52) qui forment des saillies radiales vers l'extérieur et qui sont répartis angulairement autour dudit axe d'articulation en laissant entre eux des intervalles de passage, de manière qu'une dite opération d'assemblage puisse se faire d'abord par une opération de pénétration coaxiale dudit raccord male dans ledit raccord femelle avec passage desdits tenons de chacun de ces raccords par lesdits intervalles de passage de l'autre, puis par une opération de rotation d'assemblage au cours de laquelle ces raccords tournent l'un par rapport à l'autre d'un angle de rotation d'assemblage autour dudit axe d'articulation (5) jusqu'à amener les tenons de chacun de ces raccords en coïncidence angulaire avec ceux de l'autre pour empêcher une extraction dudit raccord mâle, une dite opération de retrait se faisant par les opérations inverses.

8. Véhicule selon la revendication 7, caractérisé par le fait que lesdits moyens de raccordement de transmission comportent deux bases de raccordement de transmission portées l'une (43) par ledit moyeu d'articulation (34) l'autre (46) par ledit corps de véhicule (2) en regard l'une de l'autre coaxialement autour dudit axe d'articulation (5), chacune de ces bases (43) portant des fiches de connexion (44) réparties angulairement autour de cet axe et aptes à coopérer avec des fiches de connexion complémentaires (45) portées par l'autre de ces bases (46) pour permettre la transmission desdits signaux de coordination

9. Véhicule selon la revendication 6, caractérisé par le fait que ledit ensemble moteur d'inclinaison (38, 37, 36A) est au moins partiellement disposé coaxialement dans ledit volume central du moyeu d'articulation (34), cet ensemble prenant appui d'une part sur ce moyeu et d'autre part, en passant à travers ladite extrémité externe ouverte de ce moyeu, sur ladite cage d'articulation (39) pour entraîner ou freiner la rotation de cette cage par rapport à ce moyeu.

10. Véhicule selon la revendication 6, caractérisé par le fait que ledit pignon moteur (6) est muni :
- d'un moyeu d'entraînement (19) tubulaire à axe transversal formant un volume central entre une extrémité interne fixée audit palonnier (18) et une extrémité externe ouverte,
- et de paliers (26, 26A) pour guider la rotation de ce pignon autour de ce moyeu,
- ledit ensemble moteur d'avance (22, 23, 21) étant au moins partiellement disposé coaxialement dans ledit volume central du moyeu d'entraînement (34), cet ensemble prenant appui d'une part sur ce moyeu et d'autre part, à travers ladite extrémité externe de ce moyeu, sur ledit pignon moteur pour entraîner ou freiner la rotation de ce pignon par rapport à ce moyeu.

11. Véhicule selon la revendication 10, caractérisé par le fait que lesdits organes de guidage de chenille (6, 7, 9, 10) comprennent deux pignons crantés qui sont situés aux deux extrémités longitudinalement opposées dudit propulseur (3) et dont des crans coopèrent avec des crans de ladite chenille (4), l'un de ces pignons (6A) constituant la partie active dudit pignon moteur (6), l'autre étant un pignon de guidage d'extrémité à rotation libre (7) et étant muni d'un moyeu de guidage tubulaire (27) à axe transversal formant un volume central entre une extrémité interne fixée audit palonnier (18) et une extrémité externe ouverte,
-un capteur d'avance (15) étant disposé dans ledit volume central dudit moyeu de guidage et étant reliée d'une part à ce moyeu, d'autre part à ce pignon en passant par ladite extrémité externe de ce moyeu pour fournir un signal de mesure d'avance représentatif de la rotation de ce pignon par rapport à ce moyeu, lesdits moyens de transmission (44, 45, 108, 110) étant prévus pour transmettre ce signal de mesure d'avance auxdits moyens de commande centraux (102).

12. Véhicule selon la revendication 9, caractérisé par le fait que ledit propulseur comporte en outre une tige de transmission d'inclinaison (70) s'étendant selon ledit axe d'articulation (5) d'une extrémité externe fixée à ladite cage d'articulation (39) à travers ladite extrémité externe ouverte dudit moyeu d'articulation (34) jusqu'à une extrémité interne située dans ledit conduit d'articulation (106),
- et un capteur d'inclinaison (33) fixé entre d'une part ladite extrémité interne de ladite tige de transmission d'inclinaison et d'autre part ledit moyeu d'articulation (34) pour fournir un signal de mesure d'inclinaison représentatif de l'inclinaison dudit palonnier (18),
- ledit ensemble moteur d'inclinaison (38, 37, 36A) entourant ladite tige de transmission d'inclinaison.

13. Véhicule selon la revendication 2, caractérisé par le fait qu'il comporte quatre dits propulseurs.

## Patentansprüche

1. Fahrzeug mit Gleisketten-Vortriebsmitteln, wobei jede Gleiskette in bezug auf eine Querachse des Fahrzeugs neigbar ist, dadurch gekennzeichnet, daß jedes seiner Vortriebsmittel die entsprechenden Vorwärts- und Neigungsmotoreinheiten in sich vereinigt und am Körper des Fahrzeugs auf leicht abnehmbare Weise montiert ist.

2. Fahrzeug mit neigbaren Gleisketten-Vortriebsmitteln, wobei dieses Fahrzeug versehen ist mit
- einem Fahrzeugkörper (2),
- mehreren Vortriebsmitteln (3), die am Fahrzeugkörper montiert sind, um am Fahrzeug Unterstützungs- und Vortriebswirkungen auszuüben, wobei jedes dieser Vortriebsmittel entlang einer Längsachse (12) orientiert ist und umfaßt:
- eine Gleiskette (4), die sich auf dem Boden abstützt und um dieses Vortriebsmittel in einer diese Längsachse enthaltenden Ebene zu einer geschlossenen Vortwärtsbewegung angetrieben wird, um dieses Vortriebsmittel in bezug auf den Boden zu verschieben,
- Gleisketten-Führungsmittel (6, 7, 9, 10), um die Vorwärtsbewegung der Gleiskette zu führen,
- ein Antriebsritzel (6), das sich in Drehrichtung bewegen kann, um die Vorwärtsbewegung der Gleiskette zu erzeugen, derart, daß die Vortriebswirkung verwirklicht wird,
- einen Querträger (18), der die Führungselemente und das Antriebsritzel (6) trägt,
- und Querträger-Montagemittel für die Montage dieses Querträgers (18) am Fahrzeugkörper (2), wobei diese Mittel ein Gelenk (16) aufweisen, das eine Neigungsbewegung dieses Querträgers in bezug auf diesen Körper durch Drehung um eine Schwenkachse (5) in Querrichtung gestattet,
- wobei dieses Fahrzeug außerdem umfaßt:
- Vorwärtsmotoreinheiten (22, 23, 21), die jeweils einem der Vortriebsmittel entsprechen, um die Drehung des Antriebsritzels (6) dieses Vortriebsmittels zu erzeugen oder zu begrenzen,
- Neigungsmotoreinheiten (38, 37, 36A), die jeweils einem der Vortriebsmittel entsprechen, um den Querträger dieses Vortriebsmittels zu Neigungsbewegungen anzutreiben oder diese zu bremsen,
- Energieversorgungsmittel (100), um die für die Vorwärts- und Neigungsmotoreinheiten erforderliche Energie zu liefern,
- und Steuermittel (102, 13), die Steuersignale an die Vorwärts- und Neigungsmotoreinheiten liefern, derart, daß die Unterstützungs- und Vortriebswirkungen der Vortriebsmittel koordiniert werden, wobei wenigstens bestimmte dieser Steuermittel zentrale Steuermittel (102) sind, die vom Fahrzeugkörper getragen werden, an Koordinationssignale zu liefern,
wobei dieses Fahrzeug dadurch gekennzeichnet ist, daß die Vorwärtsmotoreinheiten (22, 23, 21) und die Neigungsmotoreinheiten (38, 37, 36A), die einem der Vortriebsmittel (3) entsprechen, am Querträger (18) dieses Vortriebsmittels angebracht sind,
- wobei die Querträger-Montagemittel außer dem Gelenk (18) eine Einrichtung zur lösbaren Befestigung (17) anfassen, die die leichte Ausführung einer Abfolge von Demontage- und Montagevorgängen dieses Querträgers vom bzw. am Fahrzeugkörper (2) gestatten,
- wobei dieses Fahrzeug außerdem in Korrespondenz mit jedem der Vortriebsmittel Übertragungsmittel (108, 110, 44, 45) umfaßt, um wenigstens die Koordinationssignale zwischen den vom Fahrzeugkörper (2) getragenen zentralen Steuermitteln (102) und dem Vortriebsmittel zu übertragen, wobei diese Übertragungsmittel versehen sind mit verformbaren Elementen (110), die wenigstens die Neigungsbewegungen unterstützen, und trennbaren, komplementären Verbindungssteckern (44, 45), um diesen Mitteln nach einer vorübergehenden Demontage dieses Querträgers erneut ihre Funktion zu ermöglichen.

3. Fahrzeug gemäß Anspruch 2, dadurch gekennzeichnet, daß die Energieversorgungsmittel (100) vom Fahrzeugkörper (2) getragen werden, wobei die Übertragungsmittel (108, 110, 44, 45) außerdem dazu vorgesehen sind, an die Vortriebsmittel (3) die für sie notwendige Energie zu übertragen.

4. Fahrzeug gemäß Anspruch 2, dadurch gekennzeichnet, daß jedes Vortriebsmittel (3) im wesentlichen in einem von der Gleiskette (4) umgebenen, flachen Volumen enthalten ist, wobei die Gleiskette die allgemeine Form eines Bandes aufweist und eine Länge in Form einer Schleife und eine Breite besitzt, wobei eine Fläche und die Dicke dieses flachen Volumens durch diese Schleife bzw. durch diese Breite definiert sind.

5. Fahrzeug gemäß Anspruch 2, dadurch gekennzeichnet, daß der Querträger (18) die allgemeine Form einer Platte aufweist, dessen Oberfläche eine Länge in der Längsrichtung (12) sowie eine Höhe besitzt, wobei sich der Fahrzeugkörper (2) an einer Innenseite dieser Platte befindet, wobei die Führungselemente (6, 7, 9, 10), das Antriebsritzel (6) und die Motoreinheiten (22, 23, 21, 38, 37, 36A) an diesem Querträger an einer Außenseite dieser Platte angebracht sind.

6. Fahrzeug gemäß Anspruch 5, dadurch gekennzeichnet, daß das Gelenk des Querträgers (16) umfaßt:
- eine rohrförmige Gelenknabe (34), die eine von der Gelenkachse (5) gebildete Achse aufweist, und ein wenigstens zum größeren Teil auf der Außenseite des Querträgers (18) zwischen einem äußeren, geöffneten Ende und einem gegenüber dem Fahrzeugkörper (2) angeordneten inneren Ende befindliches zentrales Volumen bildet, wobei dieses innere Ende einen Teil eines entlang dieser Achse sich erstreckenden Gelenkkanals (106) bildet,
- einen Gelenkkäfig (39), der die Gelenknabe koaxial umgibt und den Querträger (18) trägt,
- und Radiallager (39, 39A) für die Führung des Gelenkkäfigs in Drehrichtung um die Gelenknabe,
- wobei die Gelenkbefestigungseinrichtung (17) eine röhrenförmige Gestalt besitzt und sich in der Verlängerung der Gelenknabe koaxial erstreckt, um den Gelenkkanal zu vervollständigen,
- wobei die Übertragungsmittel umfassen:
- zentrale Übertragungsmittel (108), die mit dem Fahrzeugkörper (2) verbunden sind,
- periphere Übertragungsmittel (110), die mit dem Querträger (18) verbunden sind,
- und Übertragungsverbindungsmittel (44, 45), die durch den Gelenkkanal (106) verlaufen und sich in der Nähe der Gelenkbefestigungseinrichtung befinden, um die peripheren Übertragungsmittel mit den zentralen Übertragungsmitteln auf leicht ablösbare Weise zu verbinden.

7. Fahrzeug gemäß Anspruch 6, dadurch gekennzeichnet, daß die Gelenkbefestigungseinrichtung (17) zwei röhrenförmige Verbindungsstücke aufweist, die ein Verbindungsstecker (41) und eine Verbindungsbuchse (40) sind, wovon eines am inneren Ende der Gelenknabe (34) und das andere am Fahrzeugkörper (2) koaxial angebracht ist, wobei die Verbindungsbuchse (40) Zapfen (50) aufweist, die nach innen weisende radiale Vorsprünge bilden und die in Winkelrichtung um die Gelenkachse (5) verteilt sind, wobei zwischen ihnen Durchgangsintervalle freigelassen sind, wobei der Verbindungsstecker (41) Zapfen (52) aufweist, die nach außen weisende radiale Vorsprünge bilden und die in Winkelrichtung um die Gelenkachse verteilt sind, wobei zwischen ihnen Durchgangsintervalle freigelassen sind, derart, daß ein solcher Montagevorgang zunächst einen Vorgang des koaxialen Eindringens des Verbindungssteckers in die Verbindungsbuchse, bei dem die Zapfen eines jeden der Verbindungsstücke durch die Durchgangsintervalle des anderen bewegt werden, und dann ein Montage-Drehvorgang umfaßt, in dessen Verlauf sich diese Verbindungsstücke relativ zueinander um einen Montage-Drehwinkel um die Gelenkachse (5) drehen, bis die Zapfen eines jeden dieser Verbindungsstücke in Winkelrichtung mit denjenigen des anderen in Übereinstimmung gelangt sind, um ein Herausziehen des Verbindungssteckers zu verhindern, wobei ein Demontagevorgang durch die umgekehrten Vorgänge ausgeführt wird.

8. Fahrzeug gemäß Anspruch 7, dadurch gekennzeichnet, daß die Übertragungsverbindungsmittel zwei Übertragungsverbindungsgrundplatten aufweisen, wovon eine (43) von der Gelenknabe (34) und die andere (46) vom Fahrzeugkörper (2) so getragen werden, daß sie sich koaxial um die Gelenkachse (5) einander gegenüber befinden, wobei jede dieser Grundplatten (43) Verbindungsstecker (44) trägt, die in Winkelrichtung um diese Achse verteilt sind und mit komplementären Verbindungssteckern (45) zusammenwirken können, die von der anderen dieser Grundplatten (46) getragen werden, um die Übertragung der Koordinationssignale zu ermöglichen.

9. Fahrzeug gemäß Anspruch 6, dadurch gekennzeichnet, daß die Neigungsmotoreinheit (38, 37, 36A) wenigstens teilweise koaxial im zentralen Volumen der Gelenknabe (34) angeordnet ist, wobei sich diese Einheit einerseits auf dieser Nabe und andererseits, indem sie durch das offene, äußere Ende dieser Nabe verläuft, auf dem Gelenkkäfig (39) abstützt, um die Drehung dieses Käfigs in bezug auf diese Nabe zu erzeugen oder zu bremsen.

10. Fahrzeug gemäß Anspruch 6, dadurch gekennzeichnet, daß das Antriebsritzel (6) versehen ist mit:
- einer röhrenförmigen Antriebsnabe (19) mit transversaler Achse, die zwischen dem am Querträger (18) befestigten inneren Ende und einem offenen, äußeren Ende ein zentrales Volumen bildet,
- und Radiallagern (26, 26A), die die Drehung dieses Ritzels um diese Nabe führen,
- wobei die Vorwärtsmotoreinheit (22, 23, 21) wenigstens teilweise koaxial im zentralen Volumen der Antriebsnabe (34) angeordnet ist, wobei sich diese Einheit einerseits auf dieser Nabe und andererseits, indem sie durch das äußere Ende dieser Nabe verläuft, auf dem Antriebsritzel abstützt, um die Drehung dieses Ritzels in bezug auf diese Nabe zu erzeugen oder zu bremsen.

11. Fahrzeug gemäß Anspruch 10, dadurch gekennzeichnet, daß die Gleisketten-Führungselemente (6, 7, 9, 10) zwei formgezahnte Ritzel umfassen, die sich an den beiden in Längsrichtung einander gegenüberliegenden Enden des Vortriebsmittels (3) befinden und deren Zähne mit den Zähnen der Gleiskette (4) zusammenwirken, wobei eines dieser Ritzel (6A) den aktiven Teil des Antriebsritzels (6) und das andere ein frei drehbares Endführungsritzel (7) ist und mit einer röhrenförmigen Führungsnabe (27) mit transversaler Achse versehen ist, die zwischen einem am Querträger (18) befestigten inneren Ende und einem offenen, äußeren Ende ein zentrales Volumen bildet,
- wobei im zentralen Volumen der Führungsnabe ein Vorwärtsmeßwertaufnehmer (15) angeordnet und einerseits mit dieser Nabe und andererseits, indem er durch das äußere Ende verläuft, mit diesem Ritzel verbunden ist, um ein Vorwärtsmeßsignal zu liefern, das die Drehung dieses Ritzels in bezug auf diese Nabe angibt, wobei die Übertragungsmittel (44, 45, 108, 110) dazu vorgesehen sind, dieses Vorwärtsmeßsignal an die zentralen Steuermittel (102) zu übertragen.

12. Fahrzeug gemäß Anspruch 9, dadurch gekennzeichnet, daß das Vortriebsmittel außerdem versehen ist mit einem Neigungsübertragungsstift (70), der sich entlang der Gelenkachse (5) von einem am Gelenkkäfig (39) befestigten äußeren Ende über das offene, äußere Ende der Gelenknabe (34) bis zu einem im Gelenkkanal (106) befindlichen inneren Ende erstreckt,
- und einem Neigungsmeßwertaufnehmer (33), der zwischen dem inneren Ende des Neigungsübertragungsstifts und der Gelenknabe (34) befestigt ist, um ein Neigungsmeßsignal zu liefern, das die Neigung des Querträgers (18) angibt,
- wobei die Neigungsmotoreinheit (38, 37, 36A) den Neigungsübertragungsstift umgibt.

13. Fahrzeug gemäß Anspruch 2, dadurch gekennzeichnet, daß es vier Vortriebsmittel umfaßt.

## Claims

1. Vehicle with track-laying propulsion units characterised in that each track can be tilted relative to a transverse axis of the vehicle and each propulsion unit comprises propulsion drive and inclination drive systems and is attached in a readily removable way to the body of the vehicle.

2. Vehicle with inclinable track-laying propulsion units comprising:
- a vehicle body (2),
- a plurality of propulsion units (3) assembled to said vehicle body to support and propel said vehicle, each propulsion unit having a generally elongate shape with a longitudinal axis (12) and comprising:
- a track (4) resting on the ground and driven in a closed loop around the propulsion unit in a plane containing the aforementioned longitudinal axis to move the propulsion unit relative to the ground,
- track guide members (6, 7, 9 and 10) to guide movement of said track,
- a drive sprocket wheel (6) to drive said track so as to bring about said propulsion action,
- a swing-arm (18) carrying said guide members and said drive sprocket wheel (6),
- means for assembling the swing-arm (18) to said vehicle body (2) comprising an articulation (16) enabling inclination of the swing-arm relative to the body by rotation about a transverse articulation axis (5),
- said vehicle further comprising:
- propulsion drive systems (22, 23, 31) each corresponding to one of said propulsion units for driving or limiting the rotation of said drive sprocket wheel (6) of that propulsion unit,
- inclination drive systems (38, 37, 36A) each corresponding to one of said propulsion units for driving or braking inclination movement of said swing-arm of that propulsion unit,
- power supply means (100) for supplying power to said propulsion and inclination drive systems, and
- control means (102, 13) supplying control signals to said propulsion and inclination drive systems so as to coordinate the support and propulsion actions of said propulsion units, some at least of these control means being central support means (102) carried by said vehicle body to supply coordination signals,
this vehicle being characterised in that said propulsion drive systems (22, 23, 31) and said inclination drive systems (38, 37, 36A) corresponding to a propulsion unit (3) are mounted on said swing-arm (18) of said propulsion unit,
- said swing-arm assembly means comprise, in addition to said articulation (16), a removable fixing device (17) enabling easy and repeated removal of the swing-arm from and assembly of the swing-arm to said vehicle body (2),
- the vehicle further comprises, in corresponding relationship to each of said propulsion units, transmission means (108, 110, 44, 45) for transmitting at least said coordination signals between said central control means (102) carried by said vehicle body (2) and said propulsion unit, the transmission means comprising deformable elements (110) to withstand at least said inclination movements and separable complementary connectors (44, 45) to enable these means to function again after temporary removal of the swing-arm.

3. Vehicle according to claim 2 characterised in that said power supply means (100) are carried by said vehicle body (2) and said transmission means (108, 110, 44, 45) are also adapted to transmit to said propulsion units (3) the power that they need.

4. Vehicle according to claim 2 characterised in that each propulsion unit (3) is substantially contained within a flat volume circumscribed by said generally stripform track (4), the surface area and thickness of this flat volume being respectively dependent on the loop length and the width of the track (4).

5. Vehicle according to claim 2 characterised in that said swing-arm (18) is a generally plate-like member the surface of which has its length in said longitudinal direction (12) and a height, said vehicle body (2) is on the inside of this plate and said guide members (6, 7, 9, 10), drive sprocket wheel (6) and drive systems (22, 23, 21, 38, 37, 36A) are on the outside of this plate.

6. Vehicle according to claim 5 characterised in that said swing-arm articulation (16) comprises:
- a tubular articulation hub (34) coaxial with said articulation axis (5) and forming a central volume at least the greater part of which is on the outside of said swing-arm (18) between an open outside end and an inside end facing said vehicle body (2), this inside end constituting part of an articulation conduit (106) extending along this axis,
- an articulation cage (39) surrounding said articulation hub coaxially and carrying said swing-arm (18), and
- ball bearings (39A and 39B) for guiding rotation of said articulation cage about said articulation hub,
- said articulation fixing device (17) being tubular in shape and extending coaxially in line with said articulation hub to complete said articulation conduit,
- said transmission means comprising:
- central transmission means (108) coupled to said vehicle body (2),
- peripheral transmission means (110) coupled to said swing-arm (18), and
- transmission coupling means (44, 45) extending through said articulation conduit (106) and located near said articulation fixing device to connect said peripheral transmission means in a readily removable way to said central transmission means.

7. Vehicle according to claim 6 characterised in that said articulation fixing device (17) comprises two tubular couplings, a male coupling (41) and a female coupling (40) of which one is mounted coaxially with said inner end of the articulation hub (34) and the other is mounted coaxially with said vehicle body (2), said female coupling (40) comprising ribs (50) which project radially inwards and which are distributed circumferentially around said articulation axis (5) with gaps between them, said male coupling (41) comprising ribs (52) which project radially outwards and which are distributed circumferentially around said articulation axis with gaps between them, so that an assembly operation can be carried out firstly by coaxial penetration of said male coupling into said female coupling with said ribs on each coupling passing through said gaps in the other, and then by an assembly rotation during which one of the couplings turns relative to the other through an assembly rotation angle about said articulation axis (5) until the ribs of each coupling are brought into angular coincidence with those of the other to prevent extraction of said male coupling, removal being accomplished by means of the converse operations.

8. Vehicle according to claim 7 characterised in that said transmission coupling means comprise two electrical connectors of which one (43) is carried by said articulation hub (34) and the other (46) is carried by said vehicle body (2), the electrical connectors facing each other and being coaxial with said articulation axis (5), each of these connectors (43) carrying contacts (44) distributed circumferentially around this axis and adapted to operate with complementary contacts (45) carried by the other connector to enable transmission of said coordination signals.

9. Vehicle according to claim 6 characterised in that at least part of said inclination drive system (38, 37, 36A) is disposed coaxially within said central volume of the articulation hub (34), this system bearing on the hub and also, passing through said open outer end of the hub, on said articulation cage (39), so as to drive or brake rotation of the cage relative to the hub.

10. Vehicle according to claim 6 characterised in that said drive sprocket wheel (6) is equipped with:
- a transverse tubular drive hub (19) forming a central volume between an inner end fixed to said swing-arm (18) and an open outer end, and
- bearings (26, 26A) which guide rotation of this sprocket wheel about the hub,
- at least part of said propulsion drive system (22, 23, 21) being disposed coaxially within said central volume of the drive hub (34), this system bearing on the hub and, through said outer end of the hub, on said drive sprocket wheel to drive or brake rotation of this sprocket wheel relative to the hub.

11. Vehicle according to claim 10 characterised in that said track guide members (6, 7, 9, 10) comprise two toothed sprocket wheels located at the longitudinally opposite ends of said propulsion unit (3) and the teeth in which cooperate with teeth in said track (4), one (6A) of these sprocket wheels constituting the active part of said drive sprocket wheel (6) and the other being a freely rotatable end guide sprocket wheel (7) equipped with a transverse tubular guide hub (27) forming a central volume between an internal end fixed to said swing-arm (18) and an open outer end, a propulsion motion sensor (15) being disposed in said central volume of said guide hub and being coupled to the hub and to the sprocket wheel, passing through said outer end of the hub, to supply a propulsion motion measurement signal representative of the rotation of this sprocket wheel relative to the hub, said transmission means (44, 45, 108, 110) being adapted to transmit this propulsion measuring signal to said central control means (102).

12. Vehicle according to claim 9 characterised in that said propulsion unit further comprises an inclination transmission rod (70) extending along said articulation axis (5) from an outer end fixed to said articulation cage (39) through said open outer end of said articulation hub (34) to an inner end situated in said articulation conduit (106), and an inclination sensor (33) fixed between said inner end of said inclination transmission rod and said articulation hub (34) to supply an inclination measurement signal representative of the inclination of said swing-arm (18), said inclination drive system (38, 37, 36A) surrounding said inclination transmission rod.

13. Vehicle according to claim 2 characterised in that it comprises four propulsion units.
